# EUROPEAN PATENT APPLICATION

(11) **EP 4 831 047 A1**
(43) Date of publication of application: **28.10.2026**
(21) Application number: 25890836.7
(22) Date of filing: 11.08.2025
(51) Int. Cl.: B62D 65/12, B62D 21/02

(54) **UNIVERSAL LOWER VEHICLE BODY, SUBFRAME, AND SUSPENSION FOR PURE ELECTRIC VEHICLE PLATFORM**

(30) Priority: 13.11.2024 CN 202411618933
(71) Applicant: Chery Automobile Co., Ltd., Wuhu, Anhui 241006 (CN)
(72) Inventor: WU, Jun, Wuhu, Anhui 241006 (CN); ZHANG, Bibo, Wuhu, Anhui 241006 (CN); YANG, Peng, Wuhu, Anhui 241006 (CN)
(74) Representative: Adamson Jones
(86) International application number: PCT/CN2025/113883
(87) International publication number: WO 2026/103242

(57) **Abstract**

A universal lower vehicle body, sub-frame, and suspension for a pure electric vehicle platform. The lower vehicle body comprises an engine compartment assembly (1), a front floor sill assembly (2), and a rear floor assembly (3). The mounting hole coordinates of a left front longitudinal beam assembly (112) and a right front longitudinal beam assembly (111), which serve as universal parts in the engine compartment assembly, corresponding to a front subframe assembly (4) are universal. The mounting hole coordinates of a left sill assembly and a right sill assembly, which serve as universal parts in the front floor sill assembly, corresponding to a battery power module (8) are universal. The mounting hole coordinates of a left rear longitudinal beam assembly and a right rear longitudinal beam assembly, which serve as universal parts in the rear floor assembly, corresponding to a rear sub frame with mount assembly (5) are universal. The mounting hole coordinates of a front suspension (9) corresponding to the front subframe assembly are universal. The mounting hole coordinates of a rear suspension (10) corresponding to the rear sub frame with mount assembly are universal. Therefore, the lower vehicle body, the subframe, and the suspension are assembled in a consistent manner.

## Description

This present disclosure claims priority to Chinese Patent Application No. 202411618933.7, filed November 13, 2024, and entitled "A COMMON LOWER BODY, SUBFRAMES AND SUSPENSIONS OF PURE ELECTRIC VEHICLE PLATFORM", the entire contents of which are incorporated herein by reference.

### TECHNICAL FIELD

The present disclosure relates to the technical field of electric vehicles, and in particular, to a common lower body, subframe and suspension for a pure electric vehicle platform.

### BACKGROUND

Currently, the sales share of the new energy vehicle market keeps growing. The integration of new technologies such as intelligent chassis, 400V-1000V high-voltage architecture power systems, smart cockpits, and autonomous driving makes vehicles increasingly intelligent. In order to adapt to smart vehicles and related intelligent products, traditional vehicle companies and new force brands have developed new platforms to meet the needs of more intelligent vehicles.

For the lower body, subframes and suspensions of vehicles, it is difficult to achieve compatible co-line assembly and production for all electric vehicles on the same platform. For example, when the weight of each model changes, the tuning components of the vehicle need to be redesigned and tuned, and different mounting points and methods make it impossible to achieve co-line assembly and production for electric vehicles. Differentiated components and mounting methods increase the number and types of platform components, as well as the differentiated development and management costs.

### SUMMARY

Addressing the deficiencies of prior art, the purpose of the present disclosure is to provide a common lower body, subframe and suspension for a pure electric vehicle platform, thereby ensuring that mounting points and methods remain unchanged to the greatest extent possible, achieving concurrent assembly and production, and solving the problem of increased quantity and variety of platform components due to differentiated components and mounting methods, as well as the associated increased development costs.

In order to achieve the above purpose, the present disclosure is implemented through the following technical solutions.

Provided is a common lower body, subframe and suspension for a pure electric vehicle platform, lower body, subframes and suspensions wherein the lower body includes an engine compartment assembly, a front floor sill assembly, and a rear floor assembly, the subframes include a front subframe assembly and a rear subframe and mount assembly, and the suspensions include a front suspension and a rear suspension; wherein
a left front longitudinal beam assembly and a right front longitudinal beam assembly, which serve as common parts in the engine compartment assembly, share common mounting hole point coordinates with the front subframe assembly;
a left sill assembly and a right sill assembly, which serve as common parts in the front floor sill assembly, share common mounting hole point coordinates with a battery power module;
a left rear longitudinal beam assembly and a right rear longitudinal beam assembly, which serve as common parts in the rear floor assembly, share common mounting hole point coordinates with the rear subframe and mount assembly; and
the front suspension shares common mounting hole point coordinates with the front subframe assembly, and the rear suspension shares common mounting hole point coordinates with the rear subframe and mount assembly, such that consistent assembly arrangements between the lower body, subframes and suspensions are achieved.

As a further implementation, wherein the mounting points of the left front longitudinal beam assembly and the right front longitudinal beam assembly have common coordinates for respective and fixed connection to a left side and a right side of the front subframe respectively.

As a further implementation, rear sides of the left front longitudinal beam assembly and the right front longitudinal beam assembly are respectively connected to a common left front shock absorber mount and a common right front shock absorber mount, and the left front shock absorber mount and a left front air spring strut assembly of the front suspension are correspondingly provided with mounting points having common coordinates configured for mutual attachment, and the right front shock absorber mount and a right front air spring strut assembly of the front suspension are correspondingly provided with mounting points having common coordinates configured for mutual attachment.

As a further implementation, the shock absorber mount and a front control arm assembly of the front suspension are correspondingly provided with mounting points having common coordinates configured for mutual attachment.

As a further implementation, the front floor sill assembly further includes a front floor body, and the left sill assembly and right sill assembly are respectively fixed to a left side and a right side of the battery power module, and the front floor body, a built-in longitudinal beam, an upper housing, and a lower housing of the battery power module are correspondingly provided with mounting points having common coordinates.

As a further implementation, each of the left rear longitudinal beam assembly and the right rear longitudinal beam assembly is provided with three fixing holes, wherein a middle hole is configured to fix a left rear air spring assembly and a right rear air spring assembly of the rear suspension, coordinates of a mounting point corresponding to the middle hole are common, other two fixing holes are configured to fix the rear subframe and mount assembly from left and right sides respectively, and coordinates of mounting points corresponding to the other fixing holes are common.

As a further implementation, the front subframe assembly is a welded structural body formed by welding an H-shaped structural weldment and a trapezoidal structural weldment, and the front subframe assembly is connected to corresponding mounting hole points of the left front longitudinal beam assembly and the right front longitudinal beam assembly via triangular regions on both sides of the H-shaped structural weldment and on both sides of the trapezoidal structural weldment.

As a further implementation, two inverted U-shaped stamped parts are respectively welded on each side of the H-shaped structural weldment, and are configured to be fixedly connected to a front lower control arm assembly of the front suspension, and coordinates of mounting points of the inverted U-shaped stamped parts are common.

As a further implementation, the rear subframe and mount assembly (5) is formed by die-casting an H-shaped cast aluminum part, and four corners of the die-casting part are provided with round cushion pads, and are respectively connected to corresponding mounting holes of the left rear longitudinal beam assembly and the right rear longitudinal beam assembly of the vehicle body via bolts.

As a further implementation, the rear subframe and mount assembly is provided with common mounting points corresponding to a suspension cushion assembly, an oblique U-shaped reinforcement rib is disposed between a vehicle body mounting bushing and the suspension cushion assembly on a rear crossbeam of an H-shaped cast aluminum part, which is configured to be fixedly connected to mounting points corresponding to the rear suspension, and coordinates of mounting points of the oblique U-shaped reinforcement rib are common.

The beneficial effects of the present disclosure are as follows.
1. The present disclosure achieves a common front subframe assembly and maintains consistency in assembly manners by using the same coordinates and sizes of fixing holes and common right and left front longitudinal beam assemblies. The present disclosure also achieves a common rear subframe and mount assembly and maintains consistency in assembly manners by using the same coordinates and sizes of fixing holes and common left and right rear longitudinal beam assemblies. By sharing the associated fixing points between the engine compartment assembly and the front subframe assembly, the common connection rod system and structure of the front suspension can be achieved. By sharing the associated fixing points between the rear floor assembly and the rear subframe and mount assembly, the common connection rod system and structure of the rear suspension can be achieved, thereby ensuring that the mounting points and manners remain unchanged to the greatest extent possible, achieving concurrent assembly and production, solving the problem of increased quantity and variety of platform components due to differentiated components and mounting manners and the problem of increased cost associated with differentiation.
2. The present disclosure achieves a common battery power module and maintains consistency in assembly manners by using the same coordinates and sizes of fixing holes and common left and right sill assemblies. Through the common electric drive three-in-one assembly, combined with adjustable stiffness of the cushions (front suspension cushion assembly, right suspension cushion assembly, left suspension cushion assembly), and identical fixing manners, hole positions, and structures, the assembly can be commonly assembled with the front subframe assembly. Through the common rear-drive electric drive three-in-one assembly, combined with adjustable stiffness of the cushions (front suspension bracket-rear drive, right suspension cushion assembly-rear drive, left suspension cushion assembly-rear drive), and identical fixing manners, hole positions, and structures, the assembly can be commonly assembled with the rear subframe welding assembly.
3. In the common design and assembly of fixing points between corresponding structures of the present disclosure, the suspension stiffness is adjusted by adjusting air pressure through calibration parameters to meet the suspension stiffness requirements of different vehicles.

### BRIEF DESCRIPTION OF DRAWINGS

The drawings accompanying the specification, which form part of the present disclosure, are intended to provide further understanding of the invention. The illustrative embodiments of the invention and their descriptions are used to explain the invention and do not constitute undue limitations on the invention.
FIG. 1(a) is a top view of a lower body, subframes and suspensions according to some embodiments of the present disclosure;
FIG. 1(b) is a front view of a lower body, subframes and suspensions according to some embodiments of the present disclosure;
FIG. 1(c) is a bottom view of a lower body, subframes and suspensions according to some embodiments of the present disclosure;
FIG. 2 is an engine compartment assembly according to some embodiments of the present disclosure;
FIG. 3(a) is a schematic diagram of the mounting points of a right front longitudinal beam assembly with a front subframe assembly (on the right side) according to some embodiments of the present disclosure;
FIG. 3(b) is a schematic diagram of the mounting points of a left front longitudinal beam assembly with a front subframe assembly (on the left side) according to some embodiments of the present disclosure;
FIG. 3(c) is a schematic diagram of a left front shock absorber mount with a left front air spring strut assembly fixing point according to some embodiments of the present disclosure;
FIG. 3(d) is a schematic diagram of a left front shock absorber mount with a control arm assembly fixing point according to some embodiments of the present disclosure;
FIG. 4(a) is a schematic diagram of a right front shock absorber mount with a right front air spring strut assembly fixing point according to some embodiments of the present disclosure;
FIG. 4(b) is a schematic diagram of a right front shock absorber mount with a control arm assembly fixing point according to some embodiments of the present disclosure;
FIG. 5(a) is a schematic diagram of a left sill assembly with a battery power module left fixing point according to some embodiments of the present disclosure;
FIG. 5(b) is a schematic diagram of a right sill assembly with a battery power module right fixing point according to some embodiments of the present disclosure;
FIG. 5(c) is a schematic diagram of a front floor body with a battery power module longitudinal beam fixing point according to some embodiments of the present disclosure;
FIG. 6(a) is a schematic structural diagram of a left rear longitudinal beam assembly with a wheel cover according to some embodiments of the present disclosure;
FIG. 6(b) is a schematic structural diagram of a right rear longitudinal beam assembly with a wheel cover according to some embodiments of the present disclosure;
FIG. 7(a) is a schematic diagram of a left rear longitudinal beam assembly according to some embodiments of the present disclosure;
FIG. 7(b) is a schematic diagram of a right rear longitudinal beam assembly according to some embodiments of the present disclosure;
FIG. 8(a) is a top view of the overall structure of a front subframe assembly according to some embodiments of the present disclosure;
FIG. 8(b) is a schematic diagram of a front subframe assembly with a suspension cushion assembly fixing point according to some embodiments of the present disclosure;
FIG. 8(c) is a schematic diagram of a front subframe assembly with lower impact beam assembly mounting holes according to some embodiments of the present disclosure;
FIG. 8(d) is a schematic diagram of a front subframe assembly with a control arm assembly fixing point according to some embodiments of the present disclosure;
FIG. 9(a) is a schematic diagram of a rear subframe and mount assembly and left and right longitudinal beam assembly fixing hole points according to some embodiments of the present disclosure;
FIG. 9(b) is a schematic top view of a rear subframe and mount assembly according to some embodiments of the present disclosure;
FIG. 9(c) is a schematic top view of a rear subframe and mount assembly according to some embodiments of the present disclosure;
FIG. 9(d) is a schematic top view of a rear subframe and mount assembly according to some embodiments of the present disclosure;
FIG. 10(a) is a schematic diagram of the mounting points of a three-in-one electric assembly consisting of a motor, controller, and reduction gearbox, and a suspension cushion assembly according to some embodiments of the present disclosure;
FIG. 10(b) is a diagram showing the mounting points of a three-in-one electric assembly consisting of a motor, controller, and reduction gearbox, and a suspension cushion assembly according to some embodiments of the present disclosure;
FIG. 11(a) is a schematic diagram of a three-in-one electric assembly consisting of a rear-drive motor, controller, and reduction gearbox according to some embodiments of the present disclosure;
FIG. 11(b) is a schematic diagram of a three-in-one electric assembly consisting of a rear drive motor, controller, and reduction gearbox according to some embodiments of the present disclosure;
FIG. 12(a) is a schematic structural diagram of a front suspension structure according to some embodiments of the present disclosure;
FIG. 12(b) is a schematic structural diagram of a front suspension structure according to some embodiments of the present disclosure;
FIG. 12(c) is a schematic structural diagram of a front suspension structure according to some embodiments of the present disclosure;
FIG. 13(a) is a schematic structural diagram of a rear suspension structure according to some embodiments of the present disclosure;
FIG. 13(b) is a schematic structural diagram of a rear suspension structure according to some embodiments of the present disclosure;
FIG. 13(c) is a schematic structural diagram of a rear suspension structure according to some embodiments of the present disclosure;
FIG. 14 is a front view of the fixing point of a battery power module with a sill assembly and the fixing point of the front floor body according to some embodiments of the present disclosure;
FIG. 15(a) is a schematic diagram of a left front steering knuckle with disc brake assembly at the front suspension according to some embodiments of the present disclosure;
FIG. 15(b) is a schematic diagram of a right front steering knuckle with disc brake assembly at the front suspension according to some embodiments of the present disclosure;
FIG. 15(c) is a schematic diagram of a left rear disc brake assembly at the rear suspension according to some embodiments of the present disclosure; and
FIG. 15(d) is a schematic diagram of a right rear disc brake assembly at the rear suspension according to some embodiments of the present disclosure.

In the figures, the spacing or dimensions between various elements have been exaggerated to show their positions, and the schematic diagram is only for illustration purposes.

Wherein: 1. engine compartment assembly; 2. front floor sill assembly; 3. rear floor assembly; 4. front subframe assembly; 5. rear subframe and mount assembly; 6. three-in-one electric assembly of motor, motor controller, and reduction gearbox; 7. three-in-one electric assembly of rear drive motor, motor controller, and reduction gearbox; 8. battery power module; 9. front suspension; 10. rear suspension; 11. front brake assembly; 12. rear brake assembly; 13. powertrain suspension system;
110. front-end structural assembly; 111. right front longitudinal beam assembly; 112. left front longitudinal beam assembly; 113. right front shock absorber mount; 114. left front shock absorber mount; 71. front suspension bracket-rear drive; 72. right suspension cushion assembly-rear drive; 73. left suspension cushion assembly-rear drive; 91. left front air spring strut assembly; 92. right front air spring strut assembly; 93. left upper front control arm assembly; 94. right upper front control arm assembly; 95. left upper rear control arm assembly; 96. right upper rear control arm assembly; 97. left lower front control arm assembly; 98. right lower front control arm assembly; 99. lower front control arm assembly; 101. left rear trailing arm assembly; 102. right rear trailing arm assembly; 103. tie rod assembly; 105. left rear upper control arm assembly; 106. right rear upper control arm assembly; 107. rear lower control arm assembly; 109. rear upper control arm assembly; 115. left rear air spring assembly; 116. right rear air spring assembly; 117. left rear shock absorber device assembly; and 118. right rear shock absorber device assembly.

### DETAILED DESCRIPTION

It should be noted that the following detailed description is illustrative and is intended to provide further clarification of the present disclosure. Unless otherwise indicated, all technical and scientific terms used in the present disclosure have the same meaning as commonly understood by those skilled in the technical field to which the present disclosure pertains.

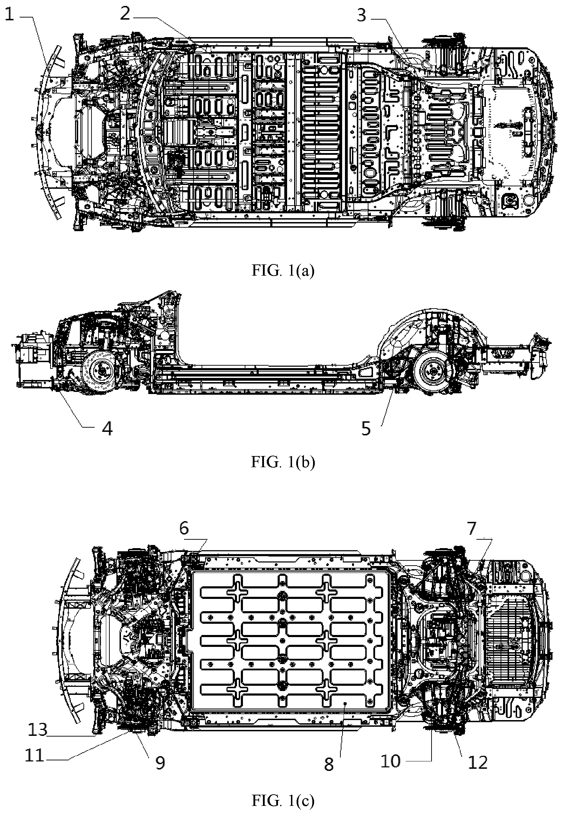

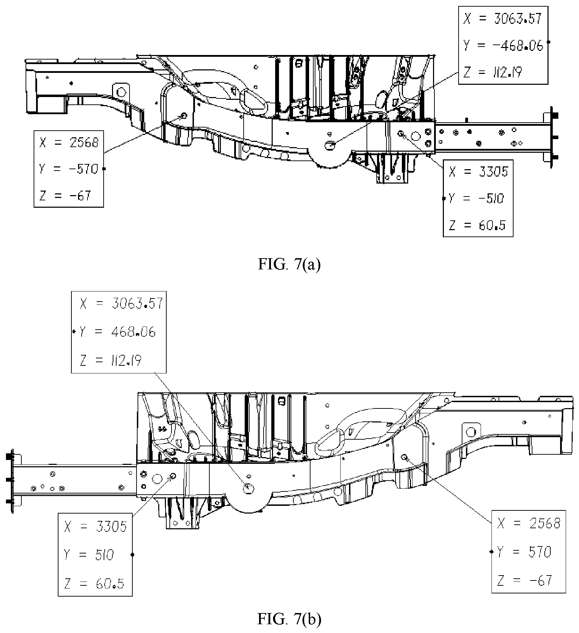

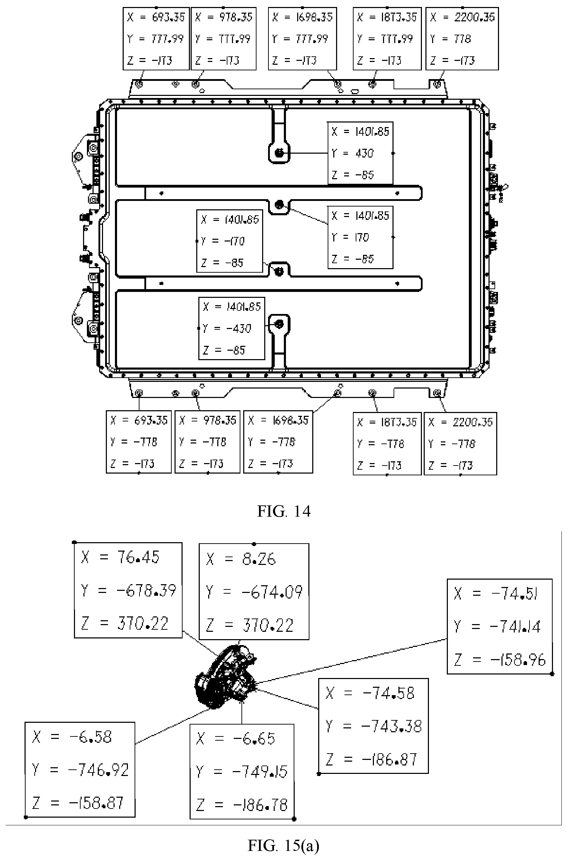

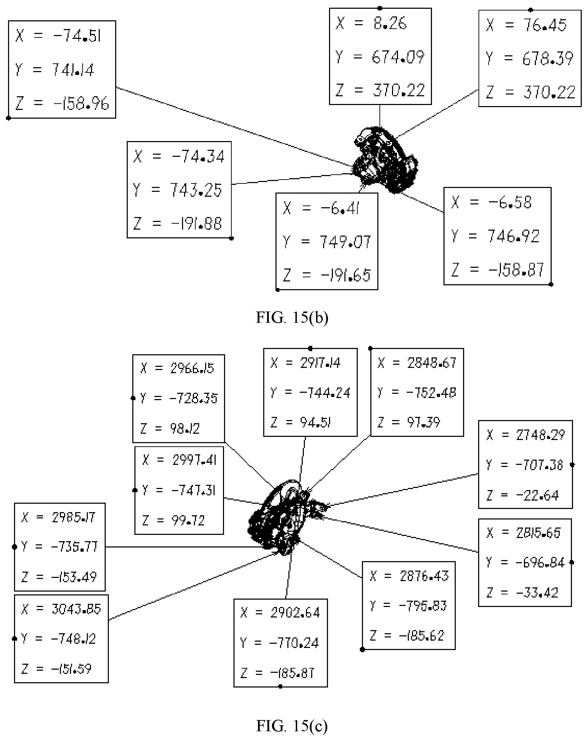

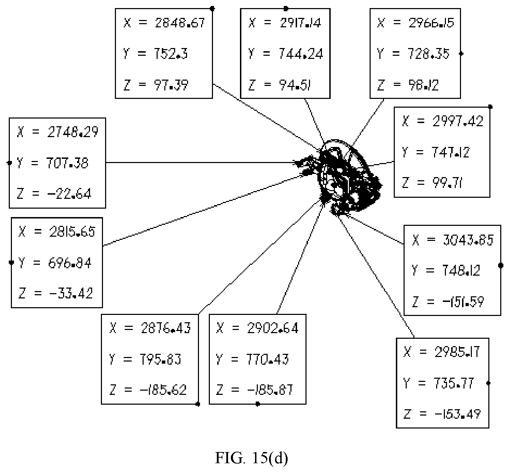

In a typical embodiment of the present disclosure, referring to FIGS. 1(a) to 15(d), a common lower body, subframes and suspensions for a pure electric vehicle platform are disclosed. The lower body for the pure electric vehicle platform includes an engine compartment assembly 1, a front floor sill assembly 2, and a rear floor assembly 3. The subframes include a front subframe assembly 4 and a rear subframe and mount assembly 5. The suspensions include a front suspension 9 and a rear suspension 10. The common lower body, subframe and suspension for the pure electric vehicle platform further include a three-in-one electric assembly consisting of a motor, motor controller, and reduction gearbox 6, a three-in-one electric assembly consisting of a rear drive motor, motor controller, and reduction gearbox 7, a battery power module 8, a front brake assembly 11, a rear brake assembly 12, and a powertrain suspension system 13.

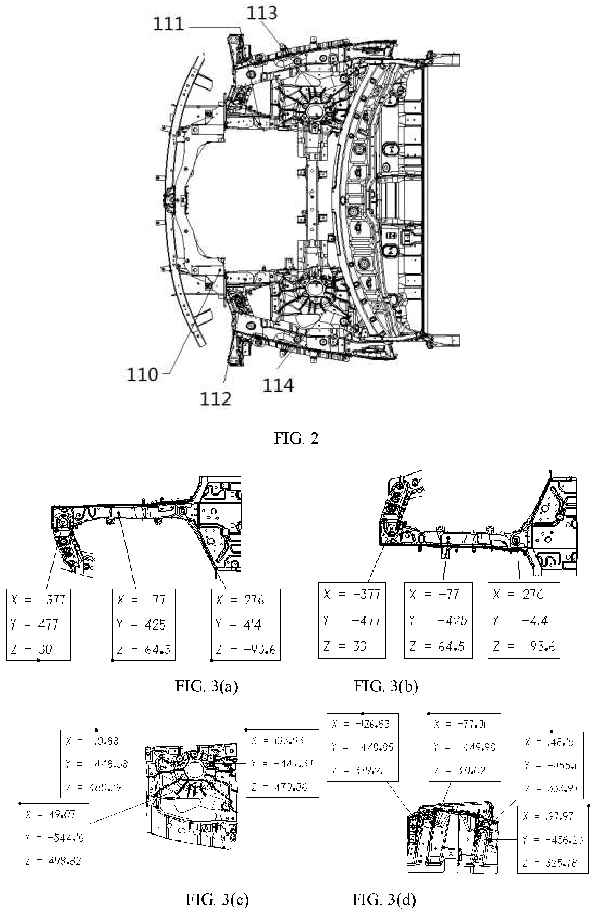

As shown in FIG. 2, the engine compartment assembly 1 includes a differentiated front-end structural assembly 110, a right front longitudinal beam assembly 111, a left front longitudinal beam assembly 112, a right front shock absorber mount 113, and a left front shock absorber mount 114, which serve as common components.

As shown in FIGS. 3(a) and 3(b), the left front longitudinal beam assembly 112 is configured to fix the three mounting points on the left side of the front subframe assembly 4, with the coordinates of the center points being: {(-377, -477, 30), (-77, -425, 64.5), (276, -414, -93.6)}. The right front longitudinal beam assembly 111 is configured to fix the three mounting points on the right side of the front subframe assembly 4, with the coordinates of the center points being: {(-377, 477, 30), (-77, 425, 64.5), (276, 414, -93.6)}.

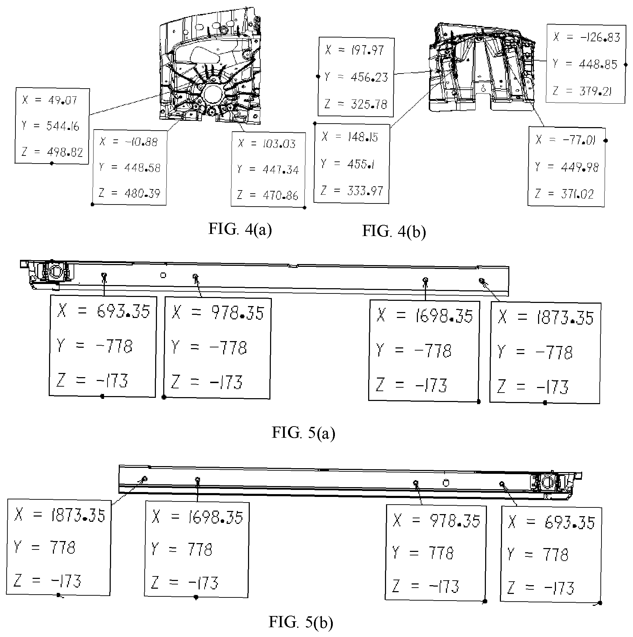

As shown in FIG. 3(c) and FIG. 4(a), the middle of the left front shock absorber mount 114 and the right front shock absorber mount 113 is a casting element with a tower structure. A circular through-hole is formed in the middle, and three oblong holes are uniformly distributed around the circular through-hole, which are configured to fix the left front air spring strut assembly 91 and the right front air spring strut assembly 92. The coordinates of the center points of the oblong holes corresponding to the left front air spring strut assembly 91 are: {(-10.88, -448.58, 480.39), (49.07, -544.16, 498.82), (103.03, -447.34, 470.86)}, and the coordinates of the center points of the oblong holes corresponding to the right front air spring strut assembly 92 are: {(-10.88, 448.58, 480.39), (49.07, 544.16, 498.82), (103.03, 447.34, 470.86)}.

As shown in FIGS. 3(d) and 4(b), the left front shock absorber mount 113 and the right front shock absorber mount 114 are hollow hexahedral structures, which become four-sided enclosed structures subsequent to removing the lower bottom surface and the front surface. On the rear of the four-sided structure, there are two inverted U-shaped groove reinforcement ribs, with two sets of circular holes configured to fix the left upper front control arm assembly 93 and the left upper rear control arm assembly 95 respectively. The coordinates of the center points of the two sets of circular holes on the inverted U-shaped groove reinforcement ribs are: {(-126.83, - 448.85, 379.21), (-77.01, -449.98, 371.02)}, {(148.15, -455.1, 333.97), (197.97, -456.23, 325.78)}. The coordinates of the center points of the sets of circular holes configured to fix the right upper front control arm assembly 94 and the right upper rear control arm assembly 96 on the inverted U-shaped groove reinforcement ribs are: {(-126.83, 448.85, 379.21), (-77.01, 449.98, 371.02)}, {(148.15, 455.1, 333.97), (197.97, 456.23, 325.78)}. The above fixing points are common fixing points of the engine compartment assembly 1, the front subframe assembly 4, and the front suspension 9, and the above assemblies can be effectively fixed into a rigid structure.

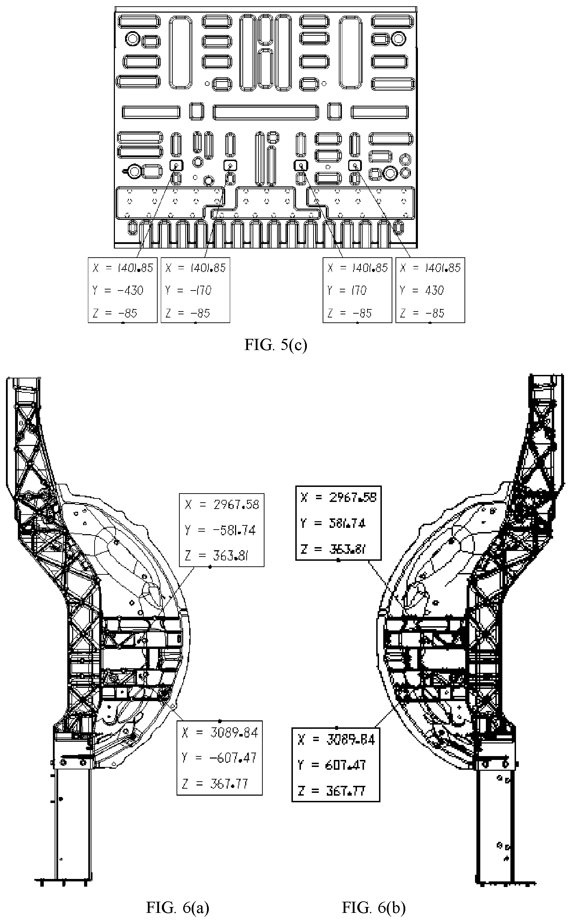

As shown in FIGS. 5(a) to 5(c), the front floor sill assembly 2 includes a common left sill assembly and a right sill assembly, as well as a front floor body. The left sill assembly is equipped with four mounting points on the left side configured to fix the battery power module 8, with the coordinates of the center points being: {(693.35, -778, -173), (978.35, -778, -173), (1698.35, -778, -173), (1873.35, -778, -173)}. The right sill assembly 8 is equipped with four mounting points on the right side configured to fix the battery power module 8, with the coordinates of the center points being: {(693.35, 778, -173), (978.35, 778, -173), (1698.35, 778, -173), (1873.35, 778, - 173)}. The front floor body is configured to fix the built-in longitudinal beam, upper housing, and lower housing of the battery power module 8 at four mounting points, with the coordinates of the center points being: {(1401.85, -430, -85), (1401.85, -170, -85), (1401.85, 170, -85), (1401.85, 430, -85)}.

As shown in FIGS. 6(a) to 7(b), the rear floor assembly 3 includes a common left rear longitudinal beam assembly and a right rear longitudinal beam assembly. The lower surface of the left rear longitudinal beam assembly has three fixing holes. The middle hole is configured to fix the left rear air spring assembly 115, with the coordinates of the center points being (3063.57, - 468.06, 112.19). The other two holes are configured to fix the two left mounting points of the rear subframe and mount assembly, with the coordinates of the center points being {(2568, -570, -67), (3305, -510, 60.5)}. The left and right rear longitudinal beam assemblies are connected to the wheel cover to form an integrated structure. Two reinforcement ribs are disposed on the inner surface of the wheel cover, and two holes in the reinforcement ribs are configured to fix the left rear shock absorber device assembly 117, with the coordinates of the center points being {(2967.58, -581.74, 363.81), (3089.84, -607.47, 367.77)}.

Correspondingly, three fixing holes are formed on the lower surface of the right rear longitudinal beam assembly. The middle hole is configured to fix the right rear air spring assembly 116, with the coordinates of the center points being (3063.57, 468.06, 112.19). The other two holes are configured to fix the two right mounting points of the rear subframe and mount assembly, with the coordinates of the center points being {(2568, 570, -67), (3305, 510, 60.5)}. Two reinforcement ribs are disposed on the inner surface of the wheel cover, and two holes in the reinforcement ribs are configured to fix the right rear shock absorber device assembly 118, with the coordinates of the center points being {(2967.58, 581.74, 363.81), (3089.84, 607.47, 367.77)}. The above fixing points are common fixing points of the rear floor assembly 3, the rear subframe and mount assembly 5, and the rear suspension 10, and the above assemblies can be effectively fixed into a rigid structure.

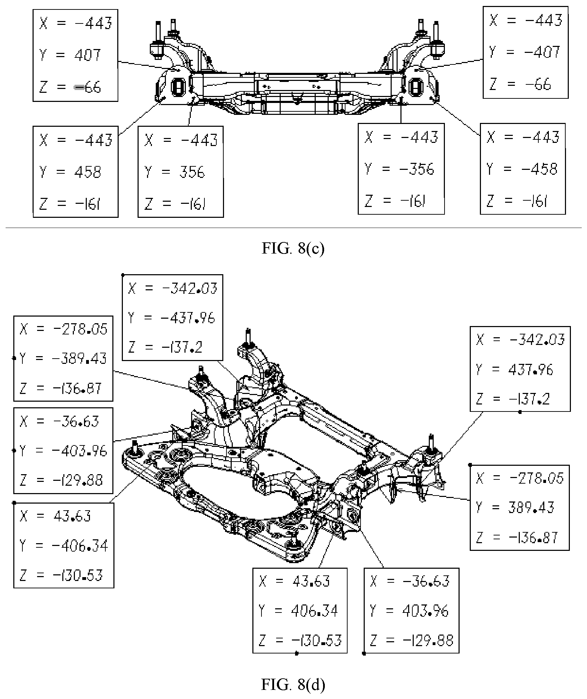

As shown in FIG. 8(c), the front subframe assembly 4 is a welded structural body formed by welding an H-shaped structural weldment (long side) and a trapezoidal structural weldment. A triangular mounting plate and three mounting bolts configured to fix the lower impact beam assembly are symmetrically disposed on both short sides of the H-shaped structural weldment. The coordinates of the center points of the three mounting holes on the left side are: {(-443, 407, -66), (-443, 458, -161), (-443, 356, -161)}, and the coordinates of the center points of the three mounting holes on the right side are: {(-443, -407, -66), (-443, -458, -161), (-443, -356, -161)}.

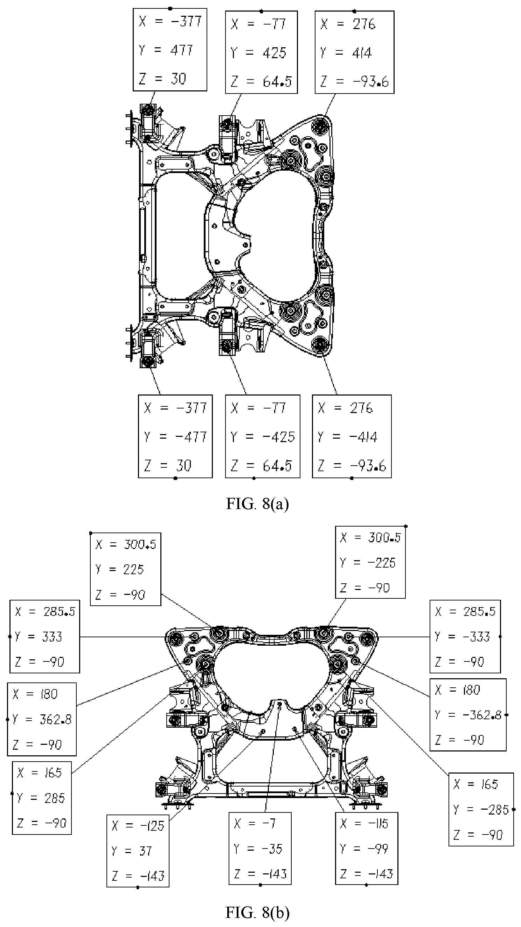

As shown in FIG. 8(a), two 7-shaped flange brackets are symmetrically welded on each side of the upper surface of the H-shaped weldment. Mounting holes are formed in brackets the right front longitudinal beam assembly 111 and the left front longitudinal beam assembly 112. The coordinates of the center points of the mounting holes are: {right front (-377, 477, 30), right rear (-77, 425, 64.5), left front (-377, -477, 30), left rear (-77, -425, 64.5)}.

As shown in FIG. 8(a), two vehicle body (right front longitudinal beam assembly 111 and left front longitudinal beam assembly 112) mounting holes are formed on symmetrical triangular regions on both sides of the trapezoidal structure. The coordinates of the center points are: {right (276, 414, -93.6), left (276, -414, -93.6)}, such that the front subframe assembly 4 is mounted with the front longitudinal beam assembly via a total of six mounting points on both sides.

As shown in FIG. 8(b), four mounting holes are symmetrically distributed in the triangular regions on both sides of the trapezoidal structure. The right side is configured to fix the right suspension cushion assembly, and the left side is configured to fix the left suspension cushion assembly. The coordinates of the center points of the hole are: {right (300.5, 225, -90), (285.5, 333, -90), (180, 362.8, -90), (165, 285, -90)}, {left (300.5, -225, -90), (285.5, -333, -90), (180, - 362.8, -90), (165, -285, -90)}. The three-in-one electric assembly 6, consisting of a motor, motor controller, and reduction gearbox, forms an assembly body with the front suspension cushion assembly, right suspension cushion assembly, and left suspension cushion assembly. The assembly body is fixedly connected to the front subframe assembly 4 by matching with mounting holes thereof. The coordinates of the holes for the right suspension cushion assembly of the assembly body are: {left rear (300.5, 224.25, -90), right rear (285.5, 333, -90), right front (180, 362.8, -90), left front (165, 285, -90)}. The coordinates of the holes for the left suspension cushion assembly of the assembly body are: {right rear (300.5, -224.25, -90), left rear (285.5, -333, -90), left front (180, -362.8, -90), right front (165, -285, -90)}. In this way, the mounting manner and mounting points for the three-in-one electric assembly 6, consisting of a motor, motor controller, and reduction gearbox, and the front subframe assembly 4 are kept unchanged.

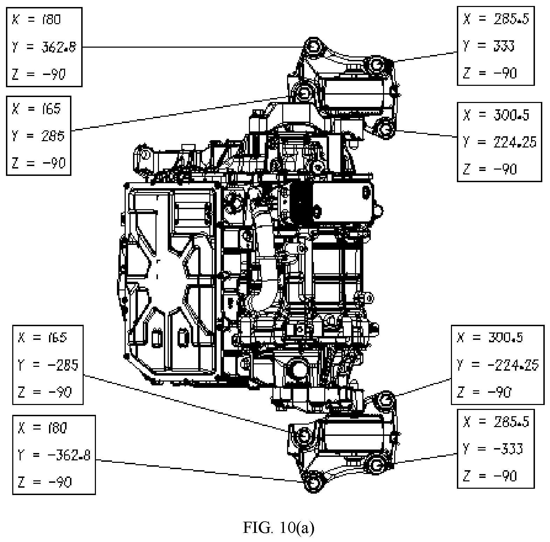

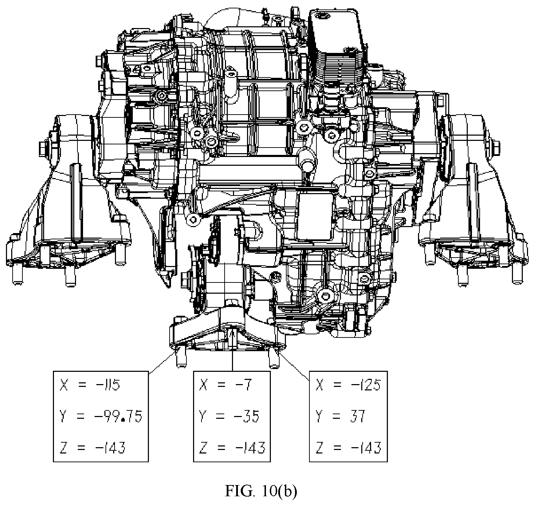

As shown in FIG. 8(b), FIG. 10(a), and FIG. 10(b), three mounting holes configured to fix the front suspension cushion assembly are formed on the "upper base" of the trapezoidal structure. The coordinates of the center points of the holes are {(-125, 37, -143), (-7, -35, -90), (-115, -99, - 143)}. Correspondingly, the coordinates of the holes in the front suspension cushion assembly are: {right front (-125, 37, -143), left front (-115, -99, -143), rear center (-7, -35, -143)} to facilitate the mounting of the front suspension cushion assembly.

As shown in FIG. 8(d), two inverted U-shaped (with flanging) stamped parts are welded on each side of the H-shaped structural weldment. Both sides of the two vertical plates of the U-shaped stamped parts are provided with bolt mounting holes, and a recessed platform structure is stamped to improve the surface fit accuracy and increase structural strength. The coordinates of the mounting holes for the right front U-shaped stamped part (configured to fix the right front lower control arm assembly 98) are: {(-342.03, 437.96, -137.2), (-278.05, 389.43, -136.87)}. The coordinates of the mounting holes for the left front U-shaped stamped part (configured to fix the left front lower control arm assembly 97) are: {(-342.03, -437.96, -137.2), (-278.05, -389.43, - 136.87)}. The coordinates of the mounting holes for the right rear U-shaped stamped part (configured to fix the front lower control arm assembly 99) are: {(-36.63, 403.96, -129.88), (43.63, 406.34, -130.53)}. The coordinates of the mounting holes for the left rear U-shaped stamped part (configured to fix the front lower control arm assembly 99) are: {(-36.63, -403.96, -129.88), (43.63, -406.34, -130.53)}.

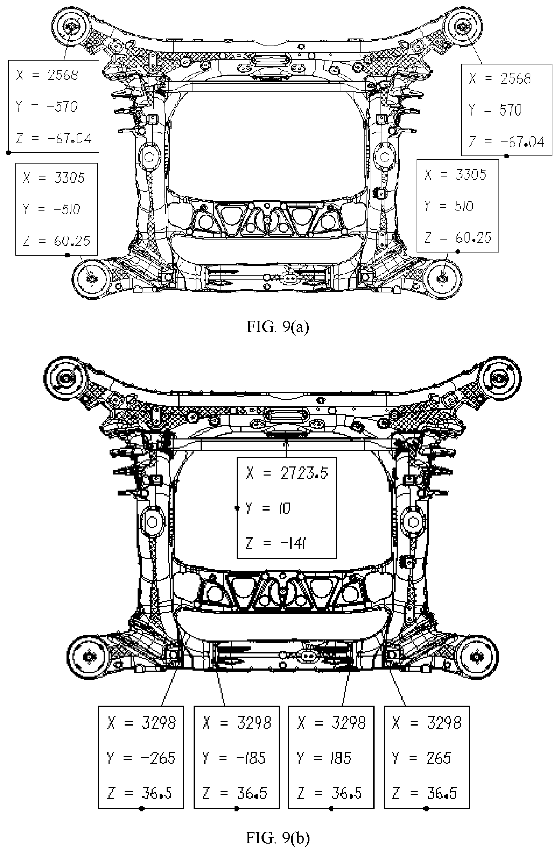

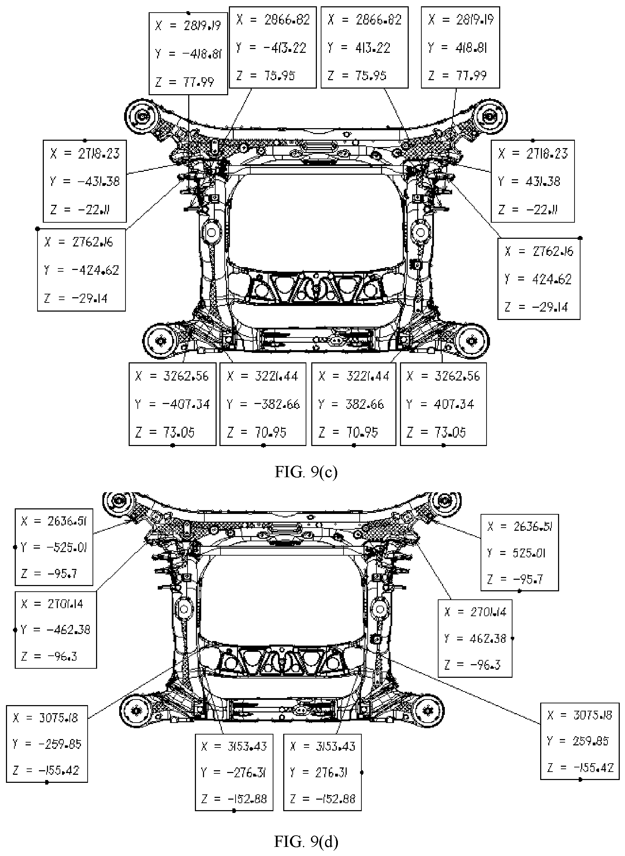

As shown in FIGS. 9(a) to 9(d), the rear subframe and mount assembly 5 is formed by die-casting an H-shaped cast aluminum. The four corners of the die-casting part are equipped with round cushion pads, which are fixed to the lower body via bolts, and are connected to the left and right rear longitudinal beam assemblies of the vehicle body. The coordinates of the mounting holes on the four corners of the die-casting are: {right front (2568, 570, -67.04), right rear (3305, 510, 60.25), left front (2568, -570, -67.04), left rear (3305, -510, 60.25)}. A cushion assembly hole is formed in the middle of the front crossbeam of the H-shaped cast aluminum part for the front suspension bracket-rear drive 71, and an integrated structure of cushion and the casting is disposed in the cushion assembly hole. The oblique U-shaped reinforcement ribs are disposed on both sides of the rear crossbeam of the H-shaped cast aluminum part. The mounting holes are formed in the middle of the reinforcement rib configured to be fixedly clamp the right suspension cushion assembly-rear drive 72 and the left suspension cushion assembly-rear drive 73. The coordinates of the two sets of mounting holes on both sides of the reinforcement ribs are: {right outer (3298, 265, 36.5), right inner (3298, 185, 36.5), left outer (3298, -265, 36.5), left inner (3298, -185, 36.5)}. A circular hole with the front suspension cushion assembly-rear drive 71 is formed in the middle of the front crossbeam of the H-shaped cast aluminum part, and the coordinates of the mounting holes for the front suspension bracket-rear drive 71 are: (2723.5, 10, -141). An oblique U-shaped reinforcement rib is disposed between a vehicle body mounting bushing and the suspension cushion assembly on a rear crossbeam of an H-shaped cast aluminum part for fixing the right rear upper control arm assembly 96 and the left rear upper control arm assembly 95. The coordinates of the two sets of mounting holes are: {right rear front (3221.44, 382.66, 70.95), right rear rear (3262.56, 407.34, 73.05)}, {left rear front (3221.44, -382.66, 70.95), left rear rear (3262.56, - 407.34, 73.05)}. Each of the two longitudinal beams on both sides of the H-shaped cast aluminum part is a semi-circular arc structural member with a large circular hole. The right rear drive shaft assembly is connected to the right output shaft of the three-in-one electric assembly 7 consisting of the rear drive motor, motor controller, and reduction gearbox, and then passes through the circular hole in the right longitudinal beam to be fixed with the right rear disc brake assembly. The left rear drive shaft assembly is connected to the left output shaft of the three-in-one electric assembly 7 consisting of the rear drive motor, motor controller, and reduction gearbox, and then passes through the circular hole in the left longitudinal beam to be fixed with the left rear disc brake assembly. A U-shaped groove with a set of waist-shaped holes is formed in the front-end root of the longitudinal beam for fixing the tie rod assembly 103. The left and right sides are symmetrical, and the tie rod assembly 103 is common. The center coordinates of the two sets of U-shaped mounting holes are: {right front (2718.23, 431.38, -22.11), right rear (2762.16, 424.62, -29.14)}, {left front (2718.23, -431.38, -22.11), left rear (2762.16, -424.62, -29.14)}. U-shaped grooves with a set of holes are symmetrically disposed on both sides of the H-shaped cast aluminum part close to the high points of the circular holes for fixing the rear upper control arm assembly, and the rear upper control arm assembly is common. The center coordinates of the two sets of U-shaped mounting holes are: {right front (2819.19, 418.81, 77.99), right rear (2866.82, 413.22, 75.95)}, {left front (2819.19, -418.81, 77.99), left rear (2866.82, -413.22, 75.95)}.

On the outer side where the front crossbeam overlaps with the two side vertical beams, a U-shaped groove structure is provided. The vertical surface of the U-shaped groove structure has two mounting holes configured to fix the right rear trailing arm assembly 102 and the left rear trailing arm assembly 101. The coordinates of the two sets of mounting holes are: {right rear front (2636.51, -525.01, -95.7), right rear rear (2701.14, -462.38, -96.3)}, {left rear front (2636.51, 525.01, -95.7), left rear rear (2701.14, 462.38, -96.3)}. A reinforcement crossbeam is disposed at approximately one-third of the way along the lower portion of the H-shaped cast aluminum component with rounded corners. The U-shaped grooves at two ends of the crossbeam and two sets of U-shaped mounting holes are configured to fix the rear lower control arm assembly (symmetrical and common). The central coordinates of the two sets of U-shaped mounting holes are: {right front (3075.18, 259.85, -155.42), right rear (3153.43, 276.31, -152.88)}, {left front (3075.18, -259.85, -155.42), left rear (3153.43, -276.31, -152.88)}.

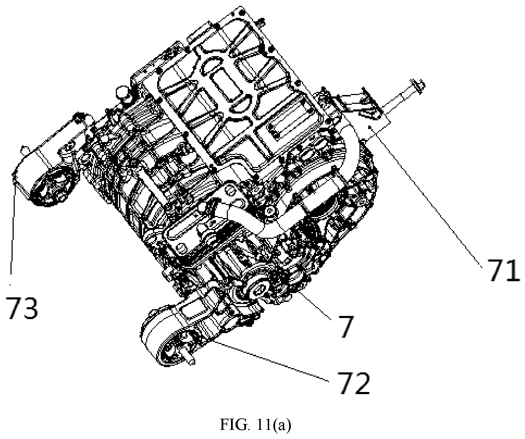

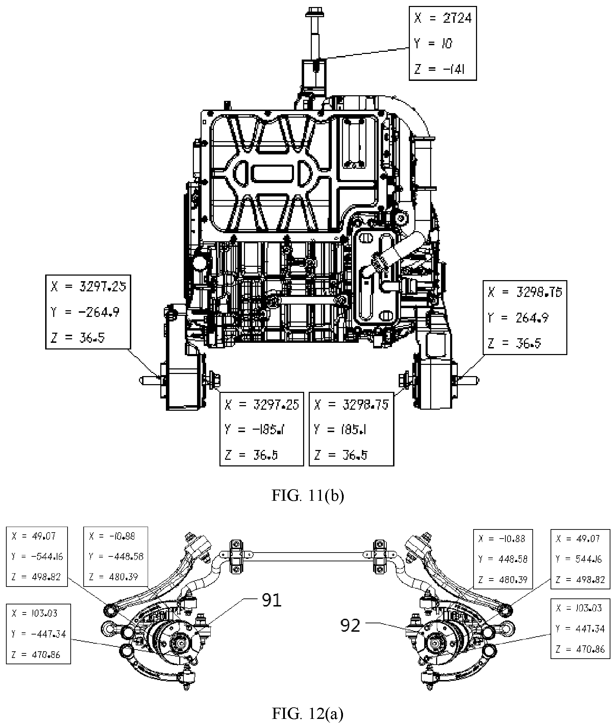

As shown in FIGS. 11(a) and 11(b), the three-in-one electric assembly 7, consisting of the rear-drive motor, motor controller, and reduction gearbox, forms an assembly with the front suspension bracket-rear-drive 71, right suspension cushion assembly-rear-drive 72, left suspension cushion assembly-rear-drive 73, and mounting holes. This assembly is fixedly connected to the mounting holes of the rear subframe and mount assembly 5 by matching.

As shown in FIGS. 11(a) and 11(b), the hole coordinates of the front suspension bracket-rear drive 71 are (2724, 10, -141), and the hole coordinates of the right suspension cushion assembly-rear drive 72 of the assembly are: {right (3298.75, 264.9, 36.5), left (3298.75, 185.1, 36.5)}. The hole coordinates of the left suspension cushion assembly-rear drive 73 of the assembly are: {right (3297.25, -185.1, 36.5), left (3297.25, -264.9, 36.5)}.

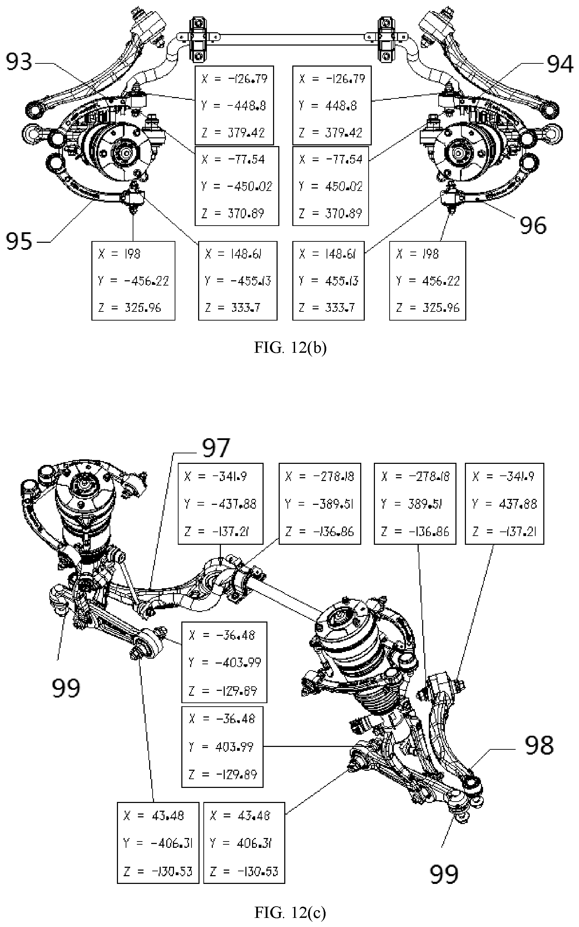

As shown in FIGS. 12(a) to 12(c), the front suspension 9 includes the left front air spring strut assembly 91 {(-10.88, -448.58, 480.39), (49.07, -544.16, 498.82), (103.03, -447.34, 470.86)} and the right front air spring strut assembly 92 {(-10.88, 448.58, 480.39), (49.07, 544.16, 498.82), (103.03, 447.34, 470.86)}.

The left front upper control arm assembly 93 {(-126.79, -448.8, 379.42), (-77.54, -450.02, 370.89)}, the right front upper control arm assembly 94 {(-126.79, 448.8, 379.42), (-77.54, 450.02, 370.89)}, the left upper rear control arm assembly 95 {(148.61, -455.13, 333.7), (198, -456.22, 325.96)}, the right upper rear control arm assembly 96 {(148.61, 455.13, 333.7), (198, 456.22, 325.96)}, the left front lower control arm assembly 97 {(-341.9, -437.88, -137.21), (-278.18, - 389.51, -136.86)}, the right front lower control arm assembly 98 {(-341.9, 437.88, -137.21), (-278.18, 389.51, -136.86)}, the front lower control arm assembly 99 (symmetrical and common) {(-36.48, -403.99, -129.89), (43.48, -406.31, -130.53)}, and the front lower control arm 99 (symmetrical and common) {(-36.48, 403.99, -129.89), (43.48, 406.31, -130.53)}, these components collectively form the front suspension, which is fixedly connected to the engine compartment assembly and the front subframe assembly of the lower body. The left front air spring strut assembly 91 and the right front air spring strut assembly 92 are fixed to the left front shock absorber mount 114 and the right front shock absorber mount 113 of the engine compartment assembly 1. In the common design and assembly of the fixing points, the suspension stiffness is adjusted by adjusting air pressure through calibration parameters to meet the suspension stiffness requirements of different vehicles.

The bushes in the left front lower control arm assembly 97 (consisting of the left front lower control arm body and the front lower control arm bushing), the right front lower control arm assembly 98 (consisting of the right front lower control arm body and the front lower control arm bushing), and the front lower control arm assembly 99 (symmetrical and common, consisting of the front lower control arm body and the front lower control arm bushing) are fixedly connected to the grooves of the "right front U-shaped stamped part, left front U-shaped stamped part, right rear U-shaped stamped part, and left rear U-shaped stamped part" of the front subframe assembly.

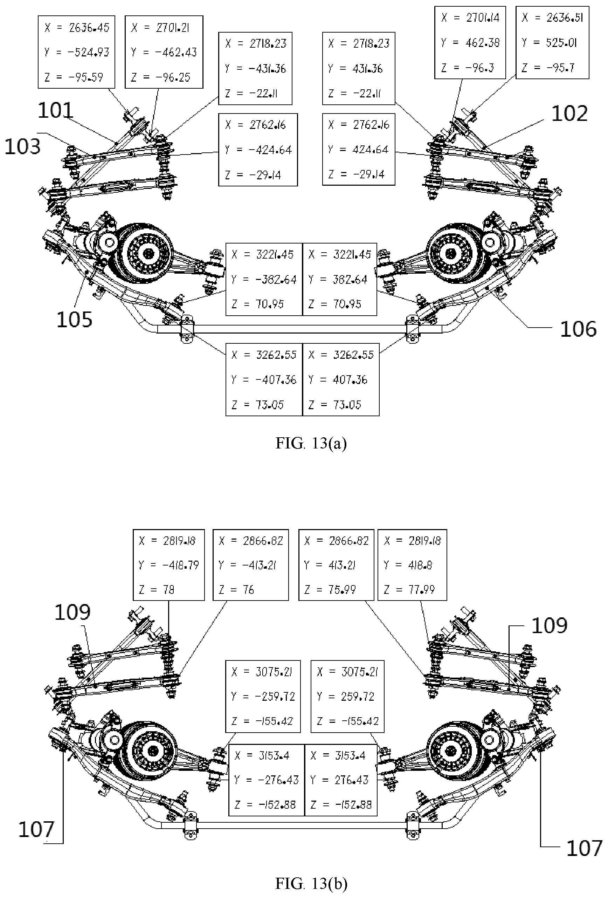

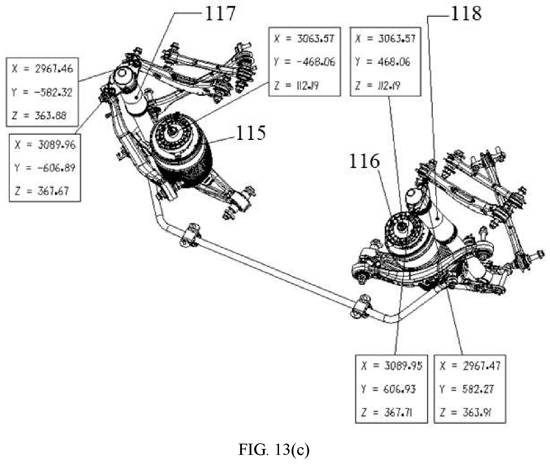

As shown in FIGS. 13(a) to 13(c), the rear suspension 10 includes the left rear trailing arm assembly 101 { (2636.45, -524.93, -95.59), (2701.21, -462.43, -96.25) }, the right rear trailing arm assembly 102 { (2636.51, 525.01, -95.7), (2701.14, 462.38, -96.3) }, the tie rod assembly 103 (bilaterally symmetrical and common) { (2718.23, -431.36, -22.11), (2762.16, -424.64, -29.14) }, the tie rod assembly 103 (symmetrical and common) { (2718.23, 431.36, -22.11), (2762.16, 424.64, -29.14) }, the left rear upper control arm assembly 105 { (3221.45, -382.64, 70.95), (3262.55, -407.36, 73.05) }, the right rear upper control arm assembly 106 { (3221.45, 382.64, 70.95), (3262.55, 407.36, 73.05) }, the rear lower control arm assembly 107 (symmetrical and common) { (3075.21, -259.72, -155.42), (3153.4, -276.43, -152.88) }, the rear lower control arm assembly 107 (symmetrical and common) { (3075.21, 259.72, -155.42), (3153.4, 276.43, -152.88) }, the rear upper control arm assembly 109 (symmetrical and common) { (2819.18, -418.79, 78), (2866.82, -413.21, 76) }, the rear upper control arm assembly 109 (symmetrical and common) { (2819.18, 418.79, 77.99), (2866.82, 413.21, 75.99) }, the left rear air spring assembly 115 (3063.57, -468.06, 112.19), the right rear air spring assembly 116 (3063.57, 468.06, 112.19), the left rear shock absorber device assembly 117 { (2967.46, -582.32, 363.88), (3089.96, -606.89, 367.67) }, and the right rear shock absorber device assembly 118 { (2967.47, 582.27, 363.91), (3089.95, 606.93, 367.71) }, these components form the rear suspension 10, which is fixedly connected to the rear floor assembly 3 of the lower body and the rear subframe and mount assembly 5.

The left rear shock absorber device assembly 117, the right rear shock absorber device assembly 118, the left rear air spring assembly 115, and the right rear air spring assembly 118 are fixed to the left rear longitudinal beam assembly and the right rear longitudinal beam assembly of the rear floor assembly 3. In the common design and assembly of fixing points, the suspension stiffness is adjusted by adjusting the air pressure through calibration parameters to meet the suspension stiffness requirements of different vehicles.

The bushing assemblies in the left rear trailing arm assembly 101 (consisting of the rear trailing arm body and the trailing arm bushing assembly), the right rear trailing arm assembly 102 (consisting of the rear trailing arm body and the trailing arm bushing assembly), the tie rod assembly 103 (symmetrical and common, consisting of the tie rod body and the bushing assembly), the rear upper control arm assembly 109 (symmetrical and common, consisting of the rear control arm body and the rear control arm bushing assembly), the left rear upper control arm assembly 105 (consisting of the left rear upper control arm body, the inner bushing of the rear upper control arm, and the outer bushing of the rear upper control arm), the right rear upper control arm assembly 106 (consisting of the right rear upper control arm body, the inner bushing of the rear upper control arm, and the outer bushing of the rear upper control arm), and the rear lower control arm assembly 107 (symmetrical and common, consisting of the rear lower control arm bushing assembly and the rear lower control arm welding assembly) are mounted and fixedly connected to the corresponding "U-shaped grooves" of the rear subframe and mount assembly 5.

As shown in FIG. 14, the battery power module 8 is encapsulated by an external upper housing and a lower housing. The two sides of the lower housing are provided with hanging structures through extrusion molding, and the surfaces of the hanging structures on both sides are respectively equipped with four circular holes, which are used for fixing with the left and right sill assemblies of the front floor sill assembly. The center coordinates of the left holes of the hanging structures are: {(693.35, -778, -173), (978.35, -778, -173), (1698.35, -778, -173), (1873.35, -778, -173)}, and the center coordinates of the right holes are: {(693.35, 777.99, -173), (978.35, 777.99, -173), (1698.35, 777.99, -173), (1873.35, 777.99, -173)}.

The interior of the battery power module 8 features a reinforcement longitudinal beam, which enhances the modal and stiffness properties of the battery power module 8. The reinforcement longitudinal beam is equipped with four openings. By connecting the reinforcement longitudinal beam, the upper housing of the battery power module 8, and the front floor body, the lower body and the battery power module 8 can be integrated into a rigid body, thereby improving side impact resistance and torsional stiffness. Both the reinforcement longitudinal beam and the surface of the upper housing inside the battery power module 8 are provided with four circular holes. The center coordinates of the holes are: {(1401.85, -430, -85), (1401.85, -170, -85), (1401.85, 170, -85), (1401.85, 430, -85)}.

As shown in FIGS. 15(a) to 15(d), the front brake assembly 11 includes a left front steering knuckle with disc brake assembly and a right front steering knuckle with disc brake assembly. The left front steering knuckle with disc brake assembly includes a fixed point (8.26, -674.09, 370.22) for the left upper front control arm assembly 93, a fixed point (76.45, -678.39, 370.22) for the left upper rear control arm assembly 95, and fixed points {(-74.51, -741.14, -158.96), (-74.58, -743.38, -186.87)} for the left front lower control arm assembly 97, as well as fixed points {(-6.65, -749.15, -186.78), (-6.58, -746.92, -158.87)} for the front lower control arm assembly 99. The right front steering knuckle with disc brake assembly includes a fixed point (8.26, 674.09, 370.22) for the right upper front control arm assembly 94, a fixed point (76.45, 678.39, 370.22) for the right upper rear control arm assembly 96, fixed points {(-74.51, 741.14, -158.96), (-74.34, 743.25, -191.88)} for the right front lower control arm assembly 98, and fixed points {(-6.41, 749.07, -191.65), (-6.58, 746.92, -158.87)} for the front lower control arm assembly 99.

Rear brake assembly 12 includes a left rear disc brake assembly and a right rear disc brake assembly. The left rear disc brake assembly includes rear upper control arm assembly 109 fixing points {(2848.67, -752.48, 97.39), (2917.14, -744.24, 94.51)}, left rear upper control arm assembly 105 fixing points {(2966.15, -728.35, 98.12), (2997.41, -747.31, 99.72)}, rear lower control arm assembly 107 fixing points {(2985.17, -735.77, -153.49), (3043.85, -748.12, -151.59)}, and left rear trailing arm assembly 101 fixed points {(2876.43, -795.83, -185.62), (2902.64, -770.24, - 185.87)}, tie rod assembly 103 fixed points {(2748.29, -707.38, -22.64), (2815.65, -696.84, - 33.42)}, of which the right rear disc brake assembly includes the rear upper control arm assembly 109 fixed points {(2848.67, -752.3, 97.39) (2917.14, -744.24, 94.51), fixing point 106 of the right rear upper control arm assembly (2966.15, -728.35, 98.12), (2997.42, -747.12, 99.71), fixing point 107 of the rear lower control arm assembly (2985.17, -735.77, -153.49), (3043.85, -748.12, - 151.59), fixing point 102 of the right rear trailing arm assembly (2876.43, -795.83, -185.62), (2902.64, -770.43, -185.87), fixing point of the tie rod assembly 103 (2748.29, -707.38, -22.64), (2815.65, -696.84, -33.42).

The above description is only preferred embodiments of the present disclosure and is not intended to limit the present disclosure. For those skilled in the art, the present disclosure can be subject to various modifications and variations. Any modifications, equivalent substitutions, improvements, etc. made within the spirit and principles of the present disclosure shall be included within the scope of protection of the present disclosure.

## Claims

1. A common lower body, subframes and suspensions for a pure electric vehicle platform, wherein the lower body comprises an engine compartment assembly (1), a front floor sill assembly (2), and a rear floor assembly (3), the subframes comprise a front subframe assembly (4) and a rear subframe and mount assembly (5), and the suspensions comprise a front suspension (9) and a rear suspension (10); wherein
a left front longitudinal beam assembly (112) and a right front longitudinal beam assembly (111), which serve as common parts in the engine compartment assembly (1), share common mounting hole point coordinates with the front subframe assembly (4);
a left sill assembly and a right sill assembly, which serve as common parts in the front floor sill assembly (2), share common mounting hole point coordinates with a battery power module (8);
a left rear longitudinal beam assembly and a right rear longitudinal beam assembly, which serve as common parts in the rear floor assembly (3), share common mounting hole point coordinates with the rear subframe and mount assembly (5); and
the front suspension (9) shares common mounting hole point coordinates with the front subframe assembly (4), and the rear suspension (10) shares common mounting hole point coordinates with the rear subframe and mount assembly (5), such that consistent assembly arrangements between the lower body, subframes and suspensions are achieved.

2. The common lower body, subframe, and suspension for the pure electric vehicle platform according to claim 1, wherein the mounting points of the left front longitudinal beam assembly (112) and the right front longitudinal beam assembly (111) have common coordinates for respective and fixed connection to a left side and a right side of the front subframe assembly (4).

3. The common lower body, subframe and suspension for the pure electric vehicle platform according to claim 1, wherein rear sides of the left front longitudinal beam assembly (112) and the right front longitudinal beam assembly (111) are respectively connected to a common left front shock absorber mount (114) and a common right front shock absorber mount (113), and the left front shock absorber mount (114) and a left front air spring strut assembly (91) of the front suspension (9) are correspondingly provided with mounting points having common coordinates configured for mutual attachment, and the right front shock absorber mount (113) and a right front air spring strut assembly (92) of the front suspension (9) are correspondingly provided with mounting points having common coordinates configured for mutual attachment.

4. The common lower body, subframe and suspension for the pure electric vehicle platform according to claim 3, wherein the shock absorber mount and a front control arm assembly of the front suspension (9) are correspondingly provided with mounting points having common coordinates configured for mutual attachment.

5. The common lower body, subframe and suspension for the pure electric vehicle platform according to claim 1, wherein the front floor sill assembly (2) further comprises a front floor body, and the left sill assembly and right sill assembly are respectively fixed to a left side and a right side of the battery power module (8), and the front floor body, a built-in longitudinal beam, an upper housing, and a lower housing of the battery power module (8) are correspondingly provided with mounting points having common coordinates.

6. The common lower body, subframe and suspension for the pure electric vehicle platform according to claim 1, wherein each of the left rear longitudinal beam assembly and the right rear longitudinal beam assembly is provided with three fixing holes, wherein a middle hole is configured to fix a left rear air spring assembly and a right rear air spring assembly of the rear suspension (10), coordinates of a mounting point corresponding to the middle hole are common, other two fixing holes are configured to fix the rear subframe and mount assembly (5) from left and right sides respectively, and coordinates of mounting points corresponding to the other fixing holes are common.

7. The common lower body, subframe and suspension for the pure electric vehicle platform according to claim 1, wherein the front subframe assembly (4) is a welded structural body formed by welding an H-shaped structural weldment and a trapezoidal structural weldment, and the front subframe assembly (4) is connected to corresponding mounting hole points of the left front longitudinal beam assembly (112) and the right front longitudinal beam assembly (111) via triangular regions on both sides of the H-shaped structural weldment and on both sides of the trapezoidal structural weldment.

8. The common lower body, subframe and suspension for the pure electric vehicle platform according to claim 7, wherein two inverted U-shaped stamped parts are respectively welded on each side of the H-shaped structural weldment, and are configured to be fixedly connected to a front lower control arm assembly (99) of the front suspension (9), and coordinates of mounting points of the inverted U-shaped stamped parts are common.

9. The common lower body, subframe and suspension for the pure electric vehicle platform according to claim 1, wherein the rear subframe and mount assembly (5) is formed by die-casting an H-shaped cast aluminum part, and four corners of the die-casting part are provided with round cushion pads, and are respectively connected to corresponding mounting holes of the left rear longitudinal beam assembly and the right rear longitudinal beam assembly of the vehicle body via bolts.

10. The common lower body, subframe and suspension for the pure electric vehicle platform according to claim 1, wherein the rear subframe and mount assembly (5) is provided with common mounting points corresponding to a suspension cushion assembly, an oblique U-shaped reinforcement rib is disposed between a vehicle body mounting bushing and the suspension cushion assembly on a rear crossbeam of an H-shaped cast aluminum part, which is configured to be fixedly connected to mounting points corresponding to the rear suspension (10), and coordinates of mounting points of the oblique U-shaped reinforcement rib are common.
